# FASCICULE DE BREVET EUROPEEN

(11) **EP 0 442 808 B1**
(45) Date de publication et mention de la délivrance du brevet: **15.06.1994**
(21) Numéro de dépôt: 91400357.9
(22) Date de dépôt: 13.02.1991
(51) Int. Cl.: H05B 3/58

(54) **Générateur électrothermique pour le chauffage de liquide, avec un ruban électriquement résistant spiralé sur un tube traversé par le liquide**
Elektrothermischer Generator zur Flüssigkeitserwärmung, mit einem auf dem durchflossenen Rohr spiralförmig aufgebrachten Widerstandsbandleiter
Electrothermal generator for heating liquids with a strip heating resistor wrapped around the tube

(30) Priorité: 16.02.1990 FR 9001884
(43) Date de publication de la demande: 21.08.1991
(73) Titulaire: S.A. "COMPAGNIE GENERALE DE CHAUFFE", 59350 Saint André (FR)
(72) Inventeur: Girault, Yves, F-78400 Chatou (FR)
(74) Mandataire: CABINET BONNET-THIRION

(56) Documents cités:
- EP-A- 0 312 204
- DE-A- 2 445 889
- DE-A- 2 707 244
- DE-B- 1 081 981

## Description

L'invention a trait à un générateur électrothermique tubulaire pour le chauffage de liquide, du genre comportant un ruban électriquement résistant enroulé sur un tube où circule le liquide.

Il est bien connu de chauffer un liquide circulant dans un tube en appliquant une résistance électrique convenablement alimentée sur la paroi extérieure du tube. Cette résistance est le plus couramment en forme de câble ou de ruban spiralé sur le tube.

Ce mode de chauffage de liquide doit prendre en considération deux aspects contradictoires, à savoir que la transmission de l'énergie thermique au liquide requiert une bonne conductibilité thermique du matériau constituant le tube, et un contact thermique étroit entre l'élément chauffant, câble ou ruban et la paroi du tube, tandis que le fonctionnement de l'élément chauffant implique l'isolement électrique de l'élément chauffant par rapport au tube, et l'isolement des spires de cet élément chauffant entre elles.

Or, pour les matériaux solides courants, les conductivités électrique et thermique sont étroitement liées, car elles résultent l'une et l'autre de la mobilité des électrons dans les matériaux.

Il en résulte que la puissance transférée par unité de longueur de tube est relativement limitée. Dans le cas d'un ruban chauffant, dont la forme se prête mieux que celle d'un câble aux transferts d'énergie, les puissances traversantes se situent entre 25 et 825 watts par mètre de longueur de ruban; avec un rapport de longueur au pas pour la spire de 20, les puissances s'étagent entre 0,5 et 16,5 kW par mètre de tube.

Enfin, les tubes présentent une surface d'échange grande pour un volume donné de liquide, de sorte que les portes d'énergie dans l'environnement ont tendance à n'être pas négligeables, ce qui impose un calorifugeage soigné des tubes.

Ainsi, jusqu'ici, la formule était retenue essentiellement lorsque la circulation du liquide dans une canalisation était la contrainte première, tandis que le chauffage du liquide apparaissait second; le chauffage du liquide profitait de la pré-existence de la surface d'échange offerte par une canalisation.

Ainsi, le document de brevet DE-A-2 707 244 décrit un dispositif électrique pour chauffer et vaporiser des liquides, qui comporte un fil résistant formant élément chauffant noyé spiralé dans l'épaisseur de la paroi d'un tube, entre une conduite tubulaire intérieure et une gaine extérieure. Le document est muet sur une donnée numérique quelconque, et notamment sur la densité de puissance envisagée.

Par contre, lorsque le chauffage de liquide apparaît premier, il apparaît à priori préférable de disposer les résistances chauffantes dans un volume de forme s'approchant de la sphère (ballon), pour réduire les parties à travers les parois extérieures, et d'utiliser des thermoplongeurs ou analogues, pour augmenter le transfert d'énergie vers le liquide en réduisant les "murs" de transfert.

Toutefois, l'inconvénient des ballons à thermoplongeurs notamment résulte de ce que le liquide n'est pas en circulation intense au voisinage des éléments chauffants, de sorte que les densités d'énergie transférée sont limitées par le phénomène de caléfaction, où il se forme une gaine de vapeur autour des éléments chauffants, qui fait obstacle au transfert d'énergie.

L'invention a pour but de réaliser un générateur électrothermique du genre où un ruban électriquement résistant est enroulé autour d'un tube où circule le liquide à chauffer, qui accepte des densités d'énergie nettement supérieures à celles qui sont pratiquées classiquement, sans qu'apparaissent des difficultés dues à la caléfaction.

Dans ce but l'invention propose un générateur électrothermique tubulaire pour le chauffage de liquide, comportant un élément électriquement résistant enroulé sur un tube où circule le liquide, où l'élément électriquement résistant est noyé dans l'épaisseur de paroi du tube, caractérisé en ce que l'élément résistant est un ruban en matière souple disposé entre une peau intérieure et une frette extérieure, avec un pas de spire d'enroulement compris entre 1,05 et 1,15 fois la largeur du ruban, la peau présentant une épaisseur telle qu'elle assure l'isolement électrique entre le ruban et le liquide à chauffer, tout en offrant une faible résistance au flux thermique passant du ruban au liquide, tandis que la frette est prévue pour supporter la pression du liquide chauffé dans le tube, peau et frette étant formées d'une résine réticulée avec une armure de fibres.

Comme le ruban chauffant est noyé dans la paroi du tube, et séparé du liquide par la seule épaisseur de peau, les problèmes d'isolement électrique sont résolus de façon simple, ainsi que sont supprimés les obstacles à la transmission d'énergie thermique à travers l'isolement électrique en série avec les contacts thermiques imparfaits entre ruban, isolé, et paroi extérieure du tube.

D'un autre côté, la disposition du ruban chauffant à proximité du liquide à chauffer, avec une faible épaisseur de peau, est rendue possible grâce à la disposition de la frette au-delà du ruban chauffant. De plus, la conduction thermique de la peau est du même ordre de grandeur que la conductivité thermique de l'épaisseur minimale nécessaire pour l'isolement électrique, et ne risque pratiquement pas de présenter des irrégularités locales par mauvais contact, ce qui autorise le transfert de densités d'énergie considérables. Enfin, le liquide circulant dans la canalisation, les risques de caléfaction n'apparaissent qu'avec des densités d'énergie très supérieures.

De préférence, l'armure de la paroi de tube est en fibre de verre, et mieux encore en fibre de verre tressée en gaine.

De préférence également, le ruban est composé d'une matière souple à base de graphite en soi connue, telle que vendue par la Société Le Carbone Lorraine sous la désignation commerciale de PAPYEX.

Cette matière présente des anisotropies bien marquées, sa résistivité longitudinale est de l'ordre du milliohm-mètre.

Pour assurer une densité de puissance aussi élevée que possible sans court-circuit entre les spires successives, le pas de spire sera compris entre 1,05 et 1,15 fois la largeur du ruban, ou autrement dit, la distance entre spires est de 5 à 15% de la largeur du ruban.

Selon une disposition préférée, le générateur est constitué, dans un même tube, de trois tronçons d'enroulement électriquement séparés et échelonnés longitudinalement, chaque extrémité de chaque tronçon étant munie d'une pièce de contact équipée d'un câble de connexion extérieure, en sorte de permettre le couplage à un réseau de distribution électrique. Il est à peine besoin de commenter l'intérêt de pouvoir réaliser divers couplages au réseau, pour équilibrer les charges des phases en triphasé, ou modifier la puissance appelée, par couplages étoile et triangle, ou encore faire des mises en série et en parallèles variées sur une phase.

Sous un autre aspect, le générateur se présentera comme un élément de canalisation pour liquide, avec des brides de raccordement en extrémités de façon à permettre la substitution du générateur à un élément de canalisation usuel; le générateur comportera alors une pluralité de tronçons de rubans, chaque tronçon avec un câble de connexion à chaque extrémité.

Des caractéristiques secondaires et des avantages de l'invention ressortiront d'ailleurs de la description qui va suivre, à titre d'exemple, en référence aux dessins annexés dans lesquels:
La figure 1 est une vue latérale partiellement arrachée d'un générateur électrothermique selon l'invention;
La figure 2 est un détail de la zone II de la figure 1;
La figure 3 est une coupe suivant le plan III-III de la figure 2;
La figure 4 est une vue en perspective arrachée d'une pièce de connexion électrique d'extrémité d'enroulement chauffant.

Selon le mode de réalisation choisi et représenté, un générateur électrothermique pour le chauffage de liquide se présente sous l'aspect d'un tronçon de tube droit 1, terminé par des brides de raccordement 2 et 3. Ce tube comprend, noyés dans l'épaisseur de sa paroi, trois enroulements chauffants 11, 12 et 13. La paroi du tube 1 se compose d'une peau intérieure mince 4, constituée d'une épaisseur de résine réticulée avec une armure de fibres de verres tressées en gaine, sur laquelle sont spiralés les éléments chauffants. Ceux-ci sont réalisés en enroulant, à spires presque jointives, un ruban souple formant résistance chauffante, fourni par la Société Le Carbone Lorraine sous la dénomination commerciale PAPYEX à base de graphite orienté. Par spires presque jointives, on entend que la distance entre les bords voisins de deux spires successives est faible devant le pas de spiralage, tout en étant suffisante pour que des courts-circuits entre spire ne soient pas à craindre. On assure ainsi la régularité du rayonnement de puissance suivant la longueur de l'élément chauffant, le faible écart entre spires n'induisant pas de discontinuité notable, tandis qu'aucune spire n'est sous-chauffée par suite d'un court-circuit.

Par-dessus les enroulements 11, 12 et 13, et la peau 4 entre les enroulements est disposée une frette 5 relativement épaisse formée de résine réticulée avec une armure de fibres de verre tressées en gaine, cette résine étant de même nature que celle de la peau 4.

On notera que la résine utilisée pour exécuter la peau et la frette est une résine connue avec laquelle on réalise des éléments de canalisations pour fluides chauds sous des pressions de service de quelques bars à quelques dizaines de bars.

On comprendra que, à la fabrication, la peau 4 est exécutée sur un mandrin, en enduisant de résine l'armure et en provoquant, par chauffage une réticulation suffisamment poussée pour que cette peau 4 puisse supporter les enroulements 11, 12 et 13, mais toutefois incomplète pour que la résine de frette 5, lors de sa réticulation, fusionne avec la résine de peau 4 dont la réticulation s'achève.

Bien entendu, avec la frette 5 on exécute les brides 2 et 3, qui subissent un usinage de finition, avec dressage des tranches et perçage des trous pour les boulons de fixation.

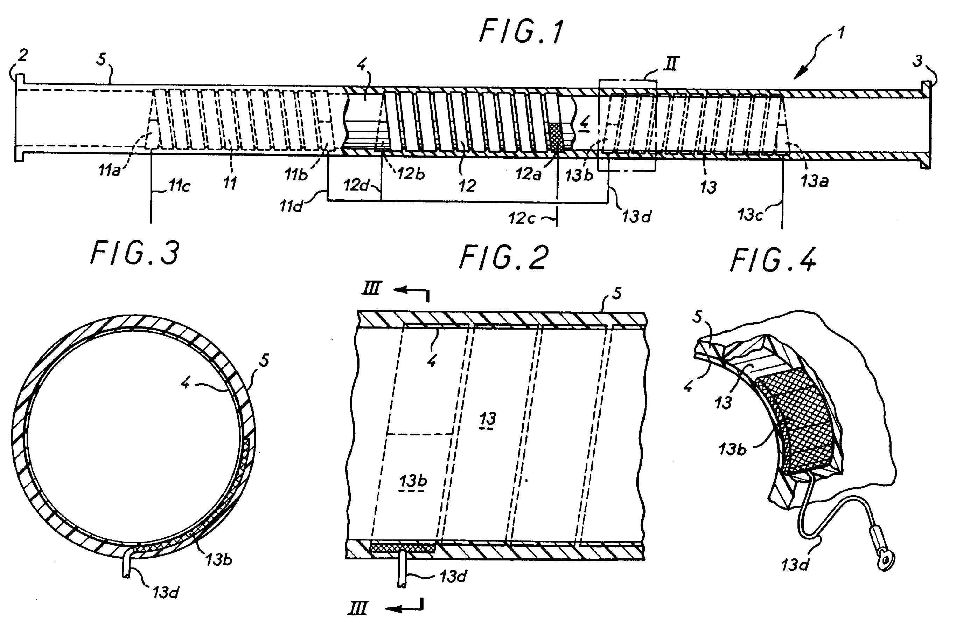

Comme on le voit sur la figure 1, les trois tronçons d'enroulement 11, 12 et 13 sont de longueurs égales en succession longitudinale, avec des intervalles entre les tronçons 11 et 12, et 12 et 13 relativement faibles, tandis que les distances entre la bride 8 et l'enroulement 11, et entre l'enroulement 13 et la bride 3 sont relativement plus importantes. Cette disposition relève sensiblement de la même préoccupation que celle de chaque enroulement, à savoir réduire les intervalles morts des éléments chauffants en réservant une sécurité convenable vis-à-vis des courts-circuits. En outre, l'écart entre les brides et l'ensemble des enroulements chauffants permet d'éviter une surchauffe des joints de bride, qui serait à craindre si les enroulements chauffants étaient trop proches de ces brides.

Une difficulté particulière aux résistances chauffantes en ruban souple à base de graphite réside dans la connexion des extrémités de ruban à des câbles pour le raccordement à un réseau de distribution. D'une part, le graphite ne peut être soudé ou brasé, et d'autre part, le ruban souple ne peut supporter des contraintes mécaniques localisées qui résulteraient d'un bridage sur une cosse de câble. En outre, un contact trop localisé risquerait de provoquer des points chauds, susceptibles de détériorer la partie métallique du contact, ou la résine avoisinante.

Ici, les trois enroulements 11, 12 et 13 ont leurs extrémités connectées à des câbles de raccordement 11c, 11d, 12c, 12d, 13c, 13d à l'aide de tampons métalliques élastiques 11a, 11b, 12a, 12b, 13a, 13b respectivement, qui sont serrés sur les extrémités du ruban par la frette 5. Les câbles sont brasés sur ces tampons métalliques. Comme on le voit mieux à la figure 4, qui représente le tampon 13b, les tampons sont en forme de secteurs tubulaires avec une largeur sensiblement égale à celle du ruban d'enroulement 13 et qui s'étendent suivant la périphérie sur un arc compris entre 70 et 105°. Leur épaisseur est suffisante pour qu'ils restent en compression élastique malgré les dilatations du tube. On obtient ainsi un contact sur une surface notable de ruban et sous une pression régulière, de sorte que les densités de courant traversant restent modérées.

Pour fixer les idées, on va préciser les grandeurs d'un générateur électrothermique, d'une puissance nominale de 48 kW, à alimentation à partir d'un réseau triphasé 220/380 Volts.

Les trois enroulements 11, 12 et 13 sont prévus pour une puissance individuelle de 16,0 kW, et un branchement en étoile, les trois phases du réseau étant reliées aux conducteurs 11c, 12c, 13c, tandis que les conducteurs 11d, 12d, 13d sont reliés entre eux pour former point milieu. Il s'ensuit que la tension aux bornes de chaque enroulement 11, 12 et 13 est de 220 Volts; pour 16,0 kW, le courant est de 73 A et la résistance de 3 ohms.

Les enroulements sont réalisés en ruban de PAPYEX de largeur 25 mm et d'épaisseur 0,4 mm de résistivité longitudinale d'environ 10 microhms.mètre, qui présente une résistance linéique de 1 Ω/m. Ces enroulements ont donc une longueur développée de 3 m.

Le tube 1 présente un diamètre intérieur de 81,8 mm, la peau ayant une épaisseur de 1 mm environ, de sorte que l'on peut tabler sur un diamètre moyen d'enroulement de 85 mm et un développé de spire de 267 mm conduisant à un nombre théorique de 11,2 spires. Compte tenu de l'encombrement des tampons de connexion, on retient 12 spires.

Le pas d'enroulement sera de 27,14 mm, pour laisser 2 mm entre spires, et en tenant compte de l'obliquité de la spire qui occupe une distance longitudinale un peu supérieure à sa largeur transversale propre. Le rapport du pas d'enroulement à la largeur du ruban est de 1,085. Par ailleurs, la longueur de chaque enroulement, suivant l'axe du tube est de 325 mm.

Ceci conduit à une charge thermique de 18,5 Watts par cm², la charge du ruban étant de près de 21 Watts par cm².

L'ensemble des trois enroulements occupera une longueur d'environ un mètre, tandis que le tube 1 présentera une longueur de 1,40 m entre tranche de brides 2 et 3.

Le diamètre extérieur du tube 1 est de 90 mm environ.

On remarquera que la frette 5, dont l'épaisseur propre avoisine 3 mm, procure au tube ses caractéristiques de tenue à la pression (1,6 MPa nominal), alors que la transmission de chaleur au liquide se fait à travers la peau mince. Pour l'épaisseur de peau 4 et la charge thermique précisées ci-dessus, la différence de température entre le ruban chauffant et le liquide au contact de la peau peut être estimée à 40°C environ. Ainsi, la température du ruban ne dépassera guère 120°C pour une température de liquide de 80°C.

On notera que le ruban de PAPYEX en soi peut supporter des températures atteignant 1000°C, de sorte que les limites de température pour le chauffage des liquides sont dues essentiellement aux résines qui constituent le tube.

Avec des résines capables de supporter en service des températures de par exemple 250°C, au lieu de 150°-160°C de la résine utilisée en exemple, les températures atteintes par le liquide pourraient atteindre au moins 140°-150°C.

Il va de soi que le générateur que l'on vient de décrire sera calorifugé de façon usuelle, en disposant autour de lui une coquille en thermoplastique, tel que polyéthylène haute densité, et en remplissant l'intervalle d'une mousse en polyuréthanne à pores fermés, formée in situ, par exemple (masse spécifique 80 kg/m³).

Bien entendu, l'invention n'est pas limitée aux exemples décrits, mais en embrasse toutes les variantes d'exécution dans le cadre des revendications.

## Revendications

1. Générateur électrothermique tubulaire pour le chauffage de liquide, comportant un élément électriquement résistant enroulé sur un tube (1) où circule le liquide, où l'élément électriquement résistant est noyé dans l'épaisseur de paroi du tube (1), caractérisé en ce que l'élément résistant est un ruban (11, 12, 13) en matière souple disposé entre une peau (4) intérieure et une frette (5) extérieure, avec un pas de spire d'enroulement compris entre 1,05 et 1,15 fois la largeur du ruban (11, 12, 13), la peau (4) présentant une épaisseur telle qu'elle assure l'isolement électrique entre le ruban (11, 12, 13) et le liquide à chauffer, tout en offrant une faible résistance au flux thermique passant du ruban au liquide, tandis que la frette (5) est prévue pour supporter la pression du liquide chauffé dans le tube (1), peau (4) et frette (5) étant formées d'une résine réticulée avec une armure de fibres.

2. Générateur selon la revendication 1, caractérisé en ce que l'armure est en fibres de verre.

3. Générateur selon la revendication 2, caractérisé en ce que les fibres d'armure sont tressées en gaine.

4. Générateur selon l'une quelconque des revendications 1 à 3, caractérisé en ce que le ruban (11, 12, 13) électriquement résistant est une matière souple à base de graphite en soi connue.

5. Générateur selon la revendication 4, caractérisé en ce que la matière souple à base de graphite présente une résistivité longitudinale de l'ordre de 10 microhms.mètre.

6. Générateur selon la revendication 5, caractérisé en ce que le ruban présente des épaisseur et largeur, de l'ordre de 0,4 et 25 mm respectivement.

7. Générateur selon une quelconque des revendications 1 à 6, caractérisé en ce que le tube (1) présente des diamètres intérieur et extérieur d'environ 82 et 90 mm respectivement, la peau intérieure ayant une épaisseur voisine de 1 mm.

8. Générateur selon la revendication 1, caractérisé en ce qu'il est constitué, dans un même tube, de trois tronçons d'enroulement (11, 12, 13) électriquement séparés, et échelonnés longitudinalement, chaque extrémité de chaque tronçon (11, 12, 13) étant munie d'une pièce de contact (11a, 11b; 12a, 12b; 13a, 13b) équipée d'un câble de connexion extérieure (11c, 11d; 12c, 12d; 13c, 13d), en sorte de permettre le couplage à un réseau de distribution électrique.

9. Générateur selon la revendication 8, caractérisé en ce que chaque pièce de contact (11a, 11d; 12a, 12b; 13a, 13b) est un patin métallique formé en secteur tubulaire, et équipé d'un câble (11c, 11d; 12c, 12d; 13c, 13d) de connexion extérieure, ce patin étant noyé sous la frette en appui sur l'extrémité de ruban.

10. Générateur selon la revendication 1, caractérisé en ce qu'il comporte, sur un élément linéaire de canalisation (1) pour liquide terminé par des brides (2, 3) de raccordement en sorte de s'insérer dans une canalisation en substitution d'un élément usuel, une pluralité de tronçons de rubans (11, 12, 13) séparés et échelonnés longitudinalement sur l'élément, chaque tronçon (11, 12, 13) muni à ses deux extrémités de câbles de connexion (11c, 11d; 12c, 12d; 13c, 13d).

## Patentansprüche

1. Elektrothermischer Rohrgenerator zum Heizen einer Flüssigkeit, der ein elektrisches Widerstandselement gewickelt auf einem Rohr (1), in dem die Flüssigkeit kreist, aufweist wobei das elektrische Widerstandselement in der Wanddicke des Rohrs (1) versenkt ist, dadurch gekennzeichnet, daß das Widerstandselement ein Band (11, 12, 13) aus weichem Material ist angeordnet zwischen einer inneren Haut (4) und einer äußeren Bandage (5), mit einer Wicklungsspiralsteigung zwischen 1,05 und 1,15 mal der Breite des Bandes (11, 12, 13), wobei die Haut (4) eine solche Dicke aufweist, daß sie die elektrische Isolation zwischen dem Band (11, 12, 13) und der zu heizenden Flüssigkeit garantiert, wobei ein geringer Widerstand dem thermischen Fluß zwischen dem Band und der Flüssigkeit geboten wird, während die Bandage (5) vorgesehen ist, um dem Druck der geheizten Flüssigkeit in dem Rohr (1) standzuhalten, wobei die Haut (4) und die Bandage (5) aus einem netzartigen Harz mit einer Faserverstärkung ausgebildet sind.

2. Generator gemäß Anspruch 1, dadurch gekennzeichnet, daß die Verstärkung aus Glasfasern ist.

3. Generator gemäß Anspruch 2, dadurch gekennzeichnet, daß die Verstärkungsfasern als Hülse geflochten sind.

4. Generator gemäß einem beliebigen Anspruch 1 bis 3, dadurch gekennzeichnet, daß das elektrisch widerstandfähige Band (11, 12, 13) aus einem weichen Material besteht, mit an sich bekanntem Graphit als Grundstoff.

5. Generator gemäß Anspruch 4, dadurch gekennzeichnet, daß das weiche Material mit Graphit als Grundstoff eine Längsresistivität der Größenordnung von einem 10 Microohm.Meter hat.

6. Generator gemäß Anspruch 5, dadurch gekennzeichnet, daß das Band eine Dicke und eine Breite aufweist der Größenordnung von 0,4 bzw. 25 mm.

7. Generator gemäß einem beliebigen Anspruch 1 bis 6, dadurch gekennzeichnet, daß das Rohr (1) innere und äußere Querschnitte aufweist, von etwa 82 bzw. 90 mm, wobei die innere Haut eine Dicke von etwa 1 mm hat.

8. Generator gemäß Anspruch 1, dadurch gekennzeichnet, daß er aus einem gleichen Rohr aus drei Wicklungsabschnitten (11, 12, 13) gebildet ist, die elektrisch getrennt und längs verteilt sind, wobei jedes Ende von jedem Abschnitt (11, 12, 13) mit einem Kontaktteil (11a, 11b; 12a, 12b; 13a, 13b) versehen ist, mit einem Außenverbindungskabel (11c, 11d; 12c, 12d; 13c, 13d), um die Verbindung mit einem elektrischen Verteilungsnetzwerk zu erlauben.

9. Generator gemäß Anspruch 8, dadurch gekennzeichnet, daß jedes Kontaktteil (11a, 11b; 12a, 12b; 13a, 13b) eine als Rohrabschnitt ausgebildete metallische Kufe ist, und mit einem Kabel (11c, 11d; 12c, 12d; 13c, 13d) zur Außenverbindung versehen ist, wobei die Kufe unter der Bandage in Auflage auf dem Bandende versenkt ist.

10. Generator gemäß Anspruch 1, dadurch gekennzeichnet, daß er auf einem linienförmigen Flüssigkeitskanalisationselement (1) abgeschlossen durch Verbindungsflansche (2, 3), um in einer Kanalisation anstelle eines üblichen Elementes eingesetzt zu werden, eine Vielzahl von voneinander getrennten und auf dem Element längsverteilten Bandabschnitten (11, 12, 13) aufweist, wobei jeder Abschnitt (11, 12, 13) an seinen beiden Ende mit Verbindungskabeln (11c, 11d; 12c, 12d; 13c, 13d) versehen ist.

## Claims

1. Tubular electrothermal generator for heating a liquid, having an electrically resistive element wound on a tube (1) in which the liquid is circulating, where the electrically resistive element is embedded in the wall of the tube (1), characterised in that the resistive element is a ribbon (11, 12, 13) of flexible material disposed between an inner skin (4) and an outer binding (5), with a winding pitch between 1.05 and 1.15 times the width of the ribbon (11, 12, 13), the skin (4) being of a thickness such that it provides electrical insulation between the ribbon (11, 12, 13) and the liquid to be heated, whilst offering low resistance to the heat flow passing from the ribbon to the liquid, whereas the binding (5) is designed to withstand the pressure of the heated liquid in the tube (1), the skin (4) and binding (5) being made from a cross-linked resin with a fibre armouring.

2. Generator according to Claim 1, characterised in that the armouring is made of glass fibres.

3. Generator according to Claim 2, characterised in that the armouring fibres are woven to form a sheath.

4. Generator according to any one of Claims 1 to 3, characterised in that the electrically resistive ribbon (11, 12, 13) is a flexible, graphite-based material known per se.

5. Generator according to Claim 4, characterised in that the flexible graphite-based material has a longitudinal resistivity of around 10 microohms.metre.

6. Generator according to Claim 5, characterised in that the ribbon has a thickness and width of around 0.4 and 25 mm respectively.

7. Generator according to any one of Claims 1 to 6, characterised in that the tube (1) has internal and external diameters of about 82 and 90 mm respectively, the inner skin having a thickness of around 1 mm.

8. Generator according to Claim 1, characterised in that it consists, in the same tube, of three sections of winding (11, 12, 13) which are electrically separate and spaced out longitudinally, each end of each section (11, 12, 13) being provided with a contact piece (11a, 11b; 12a, 12b; 13a, 13b) equipped with an external connection cable (11c, 11d; 12c, 12d; 13c, 13d), so as to enable it to be connected to an electrical mains supply.

9. Generator according to Claim 8, characterised in that each contact piece (11a, 11b; 12a, 12b; 13a, 13b) is a metal shoe in the shape of a tubular sector and equipped with an external connection cable (11c, 11d; 12c, 12d; 13c, 13d), this shoe being embedded under the binding, bearing on the end of the ribbon.

10. Generator according to Claim 1, characterised in that it has, on a linear pipework element (1) for a liquid, ending in connection flanges (2, 3) so as to be inserted into a pipe as a substitute for a normal element, a plurality of sections of ribbons (11, 12, 13), separate and spaced out longitudinally on the element, each section (11, 12, 13) being provided at both ends with connection cables (11c, 11d; 12c, 12d; 13c, 13d).
